# EUROPEAN PATENT SPECIFICATION

(11) **EP 3 796 257 B1**
(45) Date of publication and mention of the grant of the patent: **27.05.2026**
(21) Application number: 20156871.4
(22) Date of filing: 12.02.2020
(51) Int. Cl.: G06T 7/277, G06T 7/70

(54) **ESTIMATION DEVICE, ESTIMATION METHOD, AND COMPUTER PROGRAM PRODUCT**
SCHÄTZVORRICHTUNG, SCHÄTZVERFAHREN UND COMPUTERPROGRAMMPRODUKT
DISPOSITIF D'ESTIMATION, PROCÉDÉ D'ESTIMATION ET PRODUIT PROGRAMME INFORMATIQUE

(30) Priority: 17.09.2019 JP 2019168062
(43) Date of publication of application: 24.03.2021
(73) Proprietor: Kabushiki Kaisha Toshiba, Kawasaki-shi, Kanagawa 212-0013 (JP); Toshiba Electronic Devices & Storage Corporation, Tokyo, 105-0023 (JP)
(72) Inventor: Tazoe, Yusuke, Tokyo, 105-0023 (JP); Sano, Yuma, Tokyo, 105-0023 (JP); Seki, Akihito, Tokyo, 105-0023 (JP)
(74) Representative: Hoffmann Eitle

(56) References cited:
- EP-A1- 3 032 496
- US-A1- 2017 132 794
- US-A1- 2018 286 056
- US-B1- 9 031 782
- ANDREW J DAVISON ET AL: "MonoSLAM: Real-Time Single Camera SLAM", IEEE TRANSACTIONS ON PATTERN ANALYSIS AND MACHINE INTELLIGENCE, IEEE COMPUTER SOCIETY, USA, vol. 29, no. 6, 1 June 2007 (2007-06-01), pages 1052 - 1067, XP011179664, ISSN: 0162-8828, DOI: 10.1109/TPAMI.2007.1049

## Description

### FIELD

Arrangements described herein relate generally to an estimation device, an estimation method, and a computer program product.

### BACKGROUND

An estimation device is known that estimates, from an image captured by, for example, a camera mounted on a movable body, the location of the camera at the time of capturing the image, that is, the location of a movable body. The self-location estimation of a movable body sometimes fails due to various causes. In such a situation, the movable body keeps moving without recognizing the fact that the self-location estimation fails. The movable body may possibly intrude into, for example, an inherently non-travelable area. When the self-location estimation fails, the interval until the estimation becomes successful again will be a "zero-estimated" interval and, consequently, the movement trajectory of the movable body may be interrupted.

Regrettably, it is difficult for the conventional technique to estimate the location of the movable body without interrupting the movement trajectory, without using a sensor other than the camera.

US 2017/132794 A1 describes a pose estimation method and apparatus. The method includes determining, as a rotation component, an output value of a motion sensor configured to sense a motion of the pose estimation apparatus, determining a change amount of a translation component based on the rotation component, and the translation component extracted from images photographed by a vision sensor included in the pose estimation apparatus, optimizing the translation component based on the change amount, and outputting the rotation component and the optimized translation components a pose estimation value of the pose estimation apparatus.

US 2018/286056 A1 describes an information processing device, an information processing method, and a program capable of performing continuous estimation of a self-position. The information processing device includes: a main imaging unit that includes a stereo camera mounted on a moving body, and captures moving images at a predetermined frame rate to output a pair of stereo main images as time-series images; a plurality of sub imaging units each of which is so mounted on the moving body as to have an imaging direction different from an imaging direction of the main imaging unit, and captures moving images at a predetermined frame rate; and a final pose determination unit that estimates a pose of the moving body on the basis of the pair of stereo main images captured by the main imaging unit, and sub images captured by the sub imaging units. For example, the present disclosure is applicable to a self-position sensor for in-vehicle use.

EP 3 032 496 A1 describes a state estimation apparatus obtaining observation data sets for a tracking target object, and estimating an internal state of the object using likelihoods obtained from the observation data sets and the reliability of each observation data set. A first observation obtaining unit obtains first observation data. A second observation obtaining unit obtains second observation data. A first likelihood obtaining unit obtains a first likelihood based on the first observation data. A second likelihood obtaining unit obtains a second likelihood based on the second observation data. A likelihood combining unit obtains a combined likelihood based on the first and second likelihoods, first reliability data indicating the reliability of the first observation data, and second reliability data indicating the reliability of the second observation data. A posterior probability distribution obtaining unit obtains posterior probability distribution data indicating a probability distribution of the internal state of the observation target at current time t from the combined likelihood and predictive probability distribution data.

US 9 031 782 B1 describes a navigation system for a movable platform comprising a GNSS receiver sensor for providing position signals representative of the estimated current position of the movable platform; a camera sensor for providing photographic images representative of the surroundings of the movable platform; and an IMU (Inertial Measurement Unit) sensor for providing specific force and angular rate signals representative of the current specific forces and rate of the movable platform. A processor is responsive to the camera photographic images to estimate the position and attitude of the movable platform, the covariance of the position and attitude estimates and the covariance of consecutive position and attitude estimates. The processor is responsive to the GNSS receiver's estimated position signal, the camera's estimated position and attitude signal, the camera's estimated position and attitude covariance, the camera's estimated correlation of the covariance of consecutive position and attitude estimates, and the specific force and angular rate signals, for providing a navigation solution representative of the estimated current position, velocity, and attitude of the movable platform.

Andrew J Davison et al. "MonoSLAM: Real-Time Single Camera SLAM", IEEE Transactions On Pattern Analysis And Machine Intelligence, vol. 29, no. 6, describes MonoSLAM: Real-Time Single Camera SLAM.

### BRIEF DESCRIPTION OF THE DRAWINGS

FIG. 1 is a diagram illustrating an example of a movable body in a first arrangement;
FIG. 2 is a diagram illustrating an example of the functional configuration of the movable body in the first arrangement;
FIG. 3 is a flowchart illustrating an example of an estimation method in the first arrangement;
FIG. 4 is a diagram illustrating an example of the functional configuration of a processing unit in an estimation device in a second arrangement;
FIG. 5 is a flowchart illustrating an example of an estimation method in the second arrangement;
FIG. 6 is a diagram illustrating an example of the functional configuration of a processing unit in the estimation device in a third arrangement;
FIG. 7 is a flowchart illustrating an example of an estimation method in the third arrangement; and

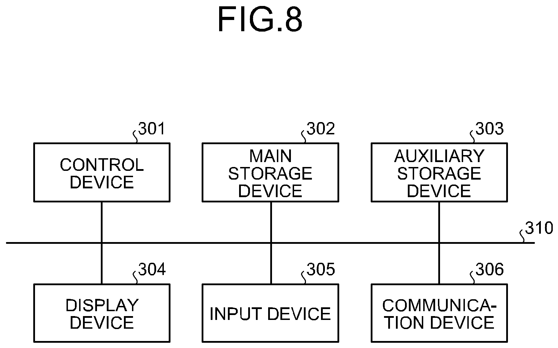

FIG. 8 is a diagram illustrating an example of the hardware configuration of the estimation device in the first to third arrangements.

### DETAILED DESCRIPTION

The problem is solved by the subject matter of the independent claims. Examples and technical descriptions of apparatuses, products and/or methods in the description and/or drawings which are not covered by the claims are presented not as embodiments of the invention but as background art or examples useful for understanding the invention. The estimation device, an estimation method, and a computer program product according to arrangements will be described below with reference to the accompanying drawings.

### First Arrangement

An estimation device in a first arrangement is mounted on, for example, a movable body.

### Example of Movable Body

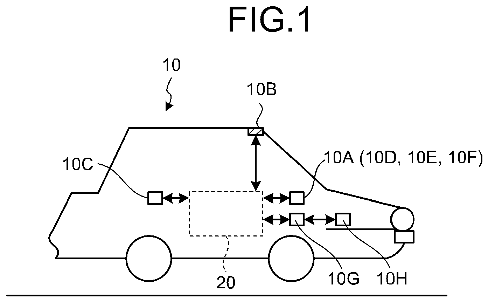

FIG. 1 is a diagram illustrating an example of a movable body 10 in the first arrangement.

The movable body 10 includes an estimation device 20, an output unit 10A, a camera 10B, a sensor 10C, a power control unit 10G, and a power unit 10H.

The movable body 10 may be any movable body. Examples of the movable body 10 include a vehicle, a carriage, and a movable robot. Examples of the vehicle include a motorcycle, an automobile, and a bicycle. The movable body 10 may be, for example, a movable body running through a human driving operation or may be a movable body capable of automatically driving (autonomous driving) without a human driving operation.

The estimation device 20 is implemented, for example, by dedicated or general-purpose computer hardware. The estimation device 20 estimates the location indicating at least one of the position and the pose of the movable body 10. Specifically, the estimation device 20 calculates the reliability for each of the self-location estimation results obtained by different methods and compares the reliability with a preset threshold to select or integrate the self-location estimation results. This configuration can eliminate the interruption in tracking of the movable body 10.

The estimation device 20 is not necessarily mounted on the movable body 10. The estimation device 20 may be mounted on a stationary object. The stationary object is, for example, an object unable to move, such as an object fixed to the ground. Examples of the stationary object fixed to the ground include a guard rail, a pole, a parked vehicle, and a road sign. For example, the stationary object is an object stationary relative to the ground. The estimation device 20 may be installed in a cloud server that executes processing on a cloud system.

The power unit 10H is a drive device mounted on the movable body 10. Examples of the power unit 10H include an engine, a motor, and a wheel.

The power control unit 10G controls the power unit 10H. The power unit 10H is driven under the control of the power control unit 10G.

The output unit 10A outputs information. In the first arrangement, the output unit 10A outputs estimation result information indicating the estimation result of motion of the camera 10B estimated by the estimation device 20.

The output unit 10A includes, for example, a communication function of transmitting estimation result information, a display function of displaying estimation result information, and a sound output function of outputting sound indicating estimation result information. The output unit 10A includes, for example, at least one of a communication unit 10D, a display 10E, and a speaker 10F. In the first arrangement, the output unit 10A includes the communication unit 10D, the display 10E, and the speaker 10F, by way of example.

The communication unit 10D transmits estimation result information to another device. For example, the communication unit 10D transmits estimation result information to another device through a communication line. The display 10E displays information on the estimation result. Examples of the display 10E include a liquid crystal display (LCD), a projector, and a light. The speaker 10F outputs sound indicating information on the estimation result.

Examples of the camera 10B include a monocular camera, a stereo camera, a fisheye camera, and an infrared camera. Any number of cameras 10B may be provided. The image taken may be a color image composed of three channels R, G, and B or may be a monochrome image of one channel represented by gray scales. The camera 10B captures time-series images of the neighborhood of the movable body 10. The camera 10B captures time-series images, for example, by capturing images of the neighborhood of the movable body 10 in time series. The neighborhood of the movable body 10 is, for example, a region in a predetermined range from the movable body 10. This range is, for example, a range that can be imaged by the camera 10B.

In the first arrangement, the camera 10B is mounted such that the front of the movable body 10 is included as the imaging direction. That is, in the first arrangement, the camera 10B captures images of the front of the movable body 10 in time series.

The sensor 10C is a sensor that measures measurement information. Examples of the measurement information include the speed of the movable body 10 and the steering angle of the steering wheel of the movable body 10. Examples of the sensor 10C include an inertial measurement unit (IMU), a speed sensor, and a steering angle sensor. The IMU measures measurement information including three-axis acceleration and three-axis angular velocity of the movable body 10. The speed sensor measures the speed from the amount of rotation of a tire. The steering angle sensor measures the steering angle of the steering wheel of the movable body 10.

An example of the functional configuration of the movable body 10 in the first arrangement will now be described in detail.

### Example of Functional Configuration

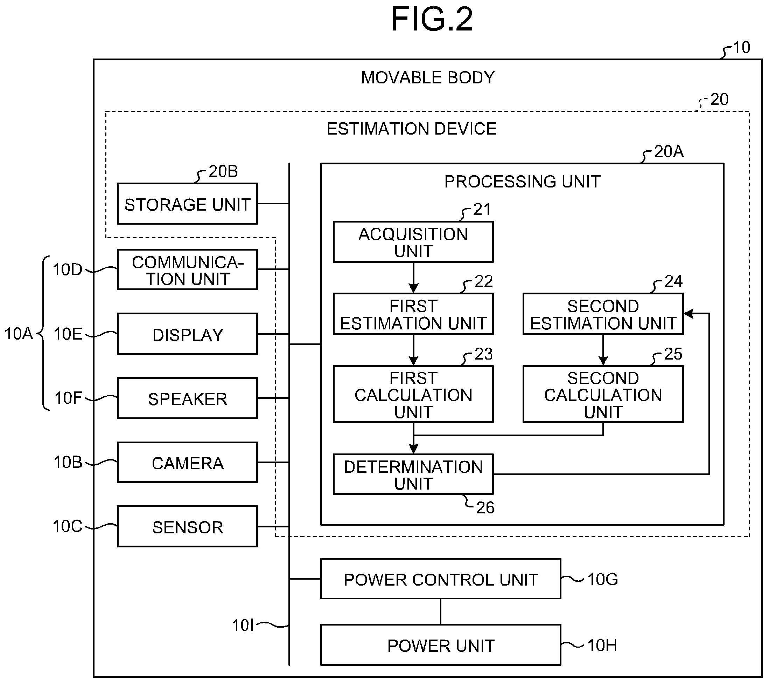

FIG. 2 is a diagram illustrating an example of the functional configuration of the movable body 10 in the first arrangement.

The movable body 10 includes an estimation device 20, an output unit 10A, a camera 10B, a sensor 10C, a power control unit 10G, and a power unit 10H. The estimation device 20 includes a processing unit 20A and a storage unit 20B. The output unit 10A includes a communication unit 10D, a display 10E, and a speaker 10F.

The processing unit 20A, the storage unit 20B, the output unit 10A, the camera 10B, the sensor 10C, and the power control unit 10G are connected through a bus 10I. The power unit 10H is connected to the power control unit 10G.

The output unit 10A (the communication unit 10D, the display 10E, and the speaker 10F), the camera 10B, the sensor 10C, the power control unit 10G, and the storage unit 20B may be connected through a network. The communication system of the network used for the connection may be wired or may be wireless. The network used for the connection may be implemented by a combination of a wired system and a wireless system.

The storage unit 20B stores information. Examples of the storage unit 20B include a semiconductor memory device, a hard disk, and an optical disc. Examples of the semiconductor memory device include a random access memory (RAM) and a flash memory. The storage unit 20B may be a storage device provided on the outside of the estimation device 20. The storage unit 20B may be a storage medium. Specifically, the storage medium may store or temporarily store a computer program and a variety of information downloaded through a local area network (LAN) or the Internet. The storage unit 20B may be configured with a plurality of storage media.

The processing unit 20A includes an acquisition unit 21, a first estimation unit 22, a first calculation unit 23, a second estimation unit 24, a second calculation unit 25, and a determination unit 26. The acquisition unit 21, the first estimation unit 22, the first calculation unit 23, the second estimation unit 24, the second calculation unit 25, and the determination unit 26 are implemented, for example, by one or more processors.

For example, the processing unit 20A may be implemented by allowing a processor such as a central processing unit (CPU) to execute a computer program, that is, by software. For example, the processing unit 20A may be implemented by a processor such as a dedicated integrated circuit (IC), that is, by hardware. For example, the processing unit 20A may be implemented by software and hardware in combination.

The term "processor" used in the present arrangement includes CPU, graphical processing unit (GPU), application specific integrated circuit (ASIC), and programmable logic device. Examples of the programmable logic device include simple programmable logic device (SPLD), complex programmable logic device (CPLD), and field programmable gate array (FPGA).

The processor reads and executes a computer program stored in the storage unit 20B to implement the processing unit 20A. A computer program may be directly built in a circuit of the processor, rather than storing a computer program in the storage unit 20B. In this case, the processor reads and executes the computer program built in the circuit to implement the processing unit 20A.

The functions of the processing unit 20A will now be described. The acquisition unit 21 acquires an image captured by the camera 10B.

When accepting an image from the acquisition unit 21, the first estimation unit 22 estimates at least one of the position and the pose of the camera 10B from the image and outputs the estimated at least one of the position and the pose as first estimation information.

The first calculation unit 23 calculates first reliability indicating the reliability of the first estimation information.

The second estimation unit 24 estimates at least one of the position and the pose of the camera 10B based on the past determination process result by the determination unit 26 and outputs the estimated at least one of the position and the pose as second estimation information. For example, the second estimation unit 24 performs estimation by applying Kalman filtering to the past determination process result output by the determination unit 26 and performing linear interpolation of the position and pose of the camera 10B at present.

The second calculation unit 25 calculates second reliability indicating the reliability of the second estimation information.

The determination unit 26 decides at least one of the position and the pose of the camera 10B from the first estimation information and the second estimation information, based on the first reliability and the second reliability, and outputs the decided at least one of the position and the pose as a determination process result.

### Example of Estimation Method

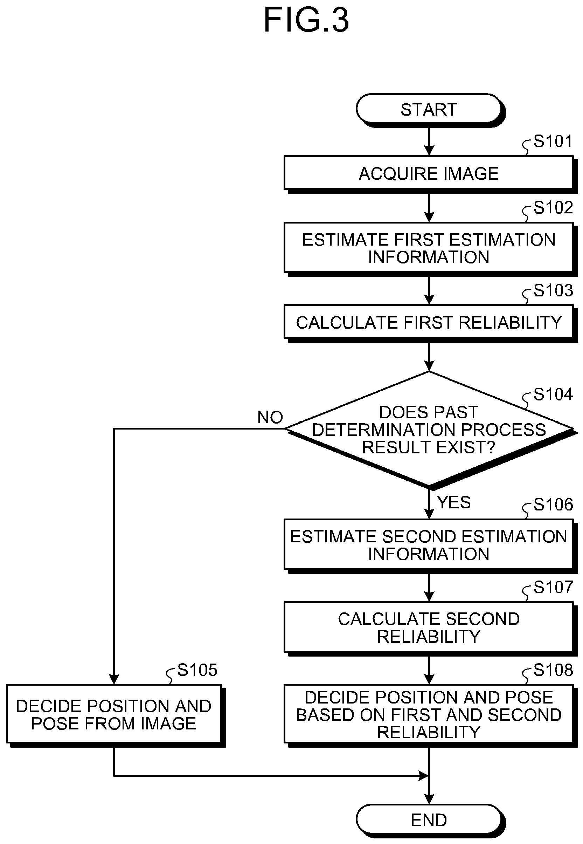

FIG. 3 is a flowchart illustrating an example of the estimation method in the first arrangement. Although in the description of FIG. 3 the estimation device 20 estimates both of the position and the pose of the camera 10B, the estimation device 20 may estimate one of the position and the pose of the camera 10B. That is, the estimation device 20 may estimate at least one of the position and the pose of the camera 10B. This is applicable to the second and third arrangements described later.

First, the acquisition unit 21 acquires an image captured by at least one or more cameras 10B (step S101).

Next, the first estimation unit 22 estimates the first estimation information using the image captured by the process at step S101 (step S102).

Specifically, the first estimation unit 22 extracts a plurality of feature points from images and performs matching between the images to estimate the position and the pose of the camera 10B at the time when each image is captured. Specifically, the position and the pose of the camera 10B at the time when each image is captured can be estimated by applying Structure from Motion (SfM) from a plurality of images obtained from the camera 10B mounted on the movable body 10.

Alternatively, for example, the first estimation unit 22 may apply Simultaneous Self-location and Mapping (SLAM) to an image acquired by the camera 10B to estimate the position and the pose of the camera 10B at the time when the image is captured. Specifically, the position and the pose can be calculated based on elementary matrices, fundamental matrices, or homography matrices, using a plurality of sets of camera coordinates of feature points. A plurality of feature point sets can be obtained by performing matching of the feature points between the images. The matching can be implemented by, for example, template matching, the Lucas-Kanade method, and SIFT. In this case, in order to obtain the absolute scale, for example, a process of normalizing the norm of a translation vector to 1 may be performed, or the scale may be determined by an acceleration sensor or a gyro sensor.

Any method may be used for representation of the position and the pose of the camera 10B. The position and the pose of the camera 10B may be represented, for example, by a combination of quaternions representing the coordinates and rotation in a three-dimensional space. When it can be assumed that a movement is made on a plane, for example, movement on the floor, the position and the pose can be represented by three degrees of freedom, that is, two degrees of freedom for translation and one degree of freedom for rotation. For example, rotation matrices, vectors representing the rotation of axis and the rotation direction, and Euler angles may be used for representing the pose in a three-dimensional space, instead of the quaternions.

A method of estimation without feature points may be used as another method of estimating the camera pose. As a specific method, for example, camera pose estimation by a deep learning model having a network for estimating the depth from an input image and a network for estimating a camera pose may be used.

Next, the first calculation unit 23 calculates the first reliability (step S103).

The method of calculating the first reliability can be implemented, for example, by the quaternions that represent the rotation components of the estimated pose of the camera 10B by four components. In this case, it may be defined that the reliability is high if the value of qw (= cos^2(θ/2) or 1-qw of the rotation components is large.

Translation may be used that represents the translation components of the estimated pose of the camera 10B by three variables. This case focuses on the movement in two dimensions for the x direction and the z direction in the global coordinate system, and it may be defined that the first reliability is high if the coefficient in the first term of an expression of n degrees fitted based on the amount of movement is large.

Next, the determination unit 26 determines whether the past determination process result by the determination unit 26 exists (step S104).

If the past determination process result does not exist (No at step S104), the determination unit 26 decides the position and the pose of the camera 10B directly from the image acquired by the process at step S101 (step S105). The position and the pose of the camera 10B may be decided, for example, by a method equivalent to the process by the first estimation unit 22 (the process at step S102) or using a method differing from the process by the first estimation unit 22. For example, when the same method as the process by the first estimation unit 22 (the process at step S102) is used, the determination unit 26 decides the final position and pose of the camera 10B by using the first estimation information.

If the past determination process result exists (Yes at step S104), the second estimation unit 24 estimates the second estimation information using the past determination process result by the determination unit 26 (step S106). Specifically, the second estimation unit 24 estimates the position and the pose at present by filtering using the position and the pose included in the past determination process result as inputs. For example, Kalman filtering may be used as the filtering. The second estimation unit 24 may apply Kalman filtering to the past determination process result (for example, when the position and the pose of the camera 10B up to the previous frame estimated by the first estimation unit 22 are selected by the determination unit 26, such position and pose) and calculate the position and the pose of the camera for the present frame by linear interpolation.

Next, the second calculation unit 25 calculates the second reliability (step S107).

The method of calculating the second reliability can be implemented, for example, using the quaternions that represent the rotation components of the estimated camera pose by four components. In this case, it may be defined that the reliability is high if the value of qw (= cos^2(θ/2) or 1-qw of the rotation components is large. Translation may be used that represents the translation components of the estimated camera pose by three variables. In this case, it may be defined that the reliability is high if the first term in the approximation expression of degree 2 obtained from the amounts of movement of Tx and Tz is large.

Next, the determination unit 26 decides the position and the pose of the camera 10B from the first estimation information and the second estimation information, based on the first reliability and the second reliability (step S108). Specifically, the determination unit 26 may determine either estimation information as the determination process result (final output result), based on the first reliability and the second reliability. For example, when estimation is performed in the first estimation unit 102 and the first reliability is larger than a threshold (first threshold), the determination unit 26 may determine the first estimation information as the final output result. For example, when the first reliability is equal to or smaller than a threshold, the determination unit 26 may refer to the second reliability and, if the second reliability is larger than a threshold (second threshold), may determine the second estimation information as the final output result. For example, when the first reliability is equal to or smaller than a threshold and the second reliability is equal to or smaller than a threshold, the determination unit 26 outputs no determination process result.

For example, when the first reliability is larger than a threshold and the second reliability is larger than a threshold, the determination unit 26 decides the position and the pose of the camera 10B by a new position and pose obtained by integrating the first estimation information and the second estimation information and outputs the decided position and pose as a determination process result.

A specific method of integrating the first estimation information and the second estimation information is described. For example, the determination unit 26 integrates a translation component of the camera 10B included in the first estimation information and a translation component of the camera 10B included in the second estimation information by the weighted mean based on the first reliability and the second reliability. For example, the determination unit 26 integrates a rotation component of the camera 10B included in the first estimation information and a rotation component of the camera 10B included in the second estimation information by spherical linear interpolation based on the first reliability and the second reliability.

The threshold for reliability (determination threshold) can be set as desired by the user and may be a constant represented by the floating-point system, for example, such as 0.9997. The same threshold may be set for the first reliability and the second reliability or different thresholds may be set. For example, when the first reliability is used as the main estimation method, a lower threshold may be set for the first reliability. When the first reliability does not exceed the threshold, the threshold for the second reliability may be set to 0 such that the estimation information by the second estimation unit is always employed as the output result.

As described above, in the estimation device 20 in the first arrangement, the acquisition unit 21 acquires an image captured by the camera 10B. The first estimation unit 22 estimates first estimation information indicating at least one of the position and the pose of the camera 10B from the image. The first calculation unit 23 calculates first reliability indicating the reliability of the first estimation information. The second estimation unit 24 estimates second estimation information indicating at least one of the position and the pose of the camera 10B. The second calculation unit calculates second reliability indicating the reliability of the second estimation information. The determination unit 26 decides at least one of the position and the pose of the camera 10B from the first estimation information and the second estimation information, based on the first reliability and the second reliability, and outputs the decided at least one of the position and the pose as a determination process result. The second estimation unit 24 estimates second estimation information based on the past determination process result by the determination unit 26.

With this configuration, the estimation device 20 in the first arrangement can estimate the location without interrupting the movement trajectory, without using a sensor other than the camera 10B. For example, the location of the movable body 10 equipped with the camera 10B can be estimated without interruption in the movement trajectory.

### Second Arrangement

A second arrangement will now be described. In a description of the second arrangement, a description similar to the first arrangement is omitted and the points differing from the first arrangement will be described. In the second arrangement, the position and the pose of the camera 10B that captures an image are estimated from the image by two different methods.

### Example of Functional Configuration

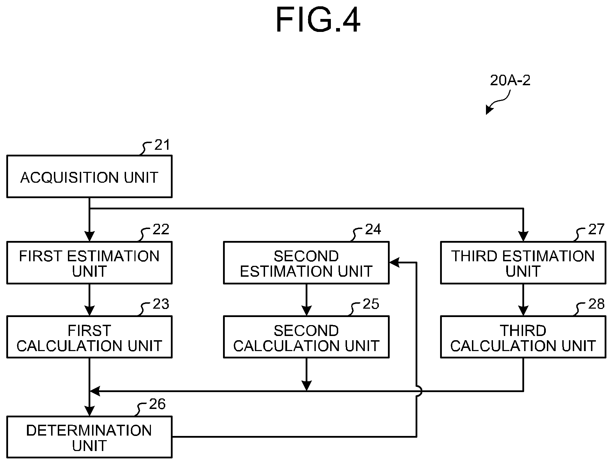

FIG. 4 is a diagram illustrating an example of the functional configuration of a processing unit 20A-2 in the estimation device 20 in the second arrangement. The processing unit 20A-2 includes an acquisition unit 21, a first estimation unit 22, a first calculation unit 23, a second estimation unit 24, a second calculation unit 25, a determination unit 26, a third estimation unit 27, and a third calculation unit 28. That is, in the second arrangement, the third estimation unit 27 and the third calculation unit 28 are added to the configuration of the first arrangement.

When accepting an image from the acquisition unit 21, the third estimation unit 27 estimates the position and the pose of the camera 10B from the image by a method differing from the first estimation unit 22 and outputs the estimated position and pose as third estimation information. For example, when the first estimation unit 22 applies SfM to a plurality of images to estimate the position and the pose of the camera 10B at the time when each image is captured, the third estimation unit 27 applies SLAM to an image to estimate the position and the pose of the camera 10B at the time when the image is captured.

The third calculation unit 28 calculates third reliability indicating the reliability of the third estimation information.

The determination unit 26 decides the position and the pose of the camera 10B from the first estimation information, the second estimation information, and the third estimation information, based on the first reliability, the second reliability, and the third reliability. The first to third reliability (or the first to third reliabilities are) is calculated based on at least one of the value of a rotation component of the pose of the camera 10B and the amount of movement of a translation component of the camera 10B.

### Example of Estimation Method

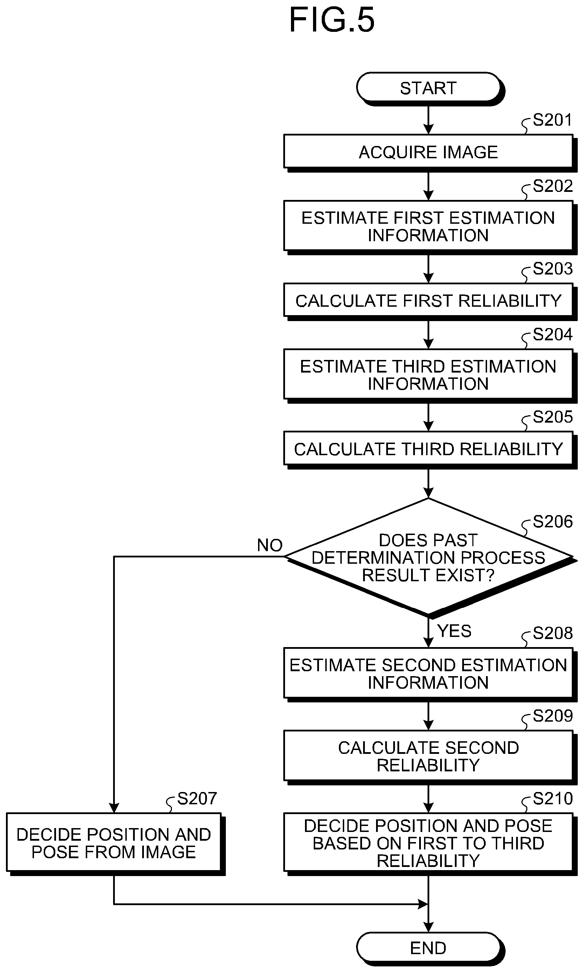

FIG. 5 is a flowchart illustrating an example of the estimation method in the second arrangement.

The processes at step S201 to step S203 are similar to the processes at step S101 to step S103 in the first arrangement and will not be further elaborated.

The third estimation unit 27 uses the image captured by the process at step S201 and estimates the position and the pose of the camera 10B by a method differing from the first estimation unit 22 to estimate the third estimation information (step S204).

Next, the third calculation unit 28 calculates the third reliability (step S205). The method of calculating the third reliability is similar to the method of calculating the first reliability and will not be further elaborated.

Next, the determination unit 26 determines whether the past determination process result by the determination unit 26 exists (step S206).

If the past determination process result does not exist (No at step S206), the determination unit 26 decides the position and the pose of the camera 10B directly from the image acquired by the process at step S201 (step S207). The position and the pose of the camera 10B may be decided, for example, by a method equivalent to the process by the first estimation unit 22 (the process at step S202) or the process by the third estimation unit 27 (the process at step S204), or using a method differing from the process by the first estimation unit 22 or the third estimation unit 27. For example, the determination unit 26 may compare the first reliability with the third reliability and decide the final position and pose of the camera 10B by the process result with higher reliability. For example, when the same method as the process by the first estimation unit 22 (the process at step S202) is used, the determination unit 26 decides the final position and pose of the camera 10B by using the first estimation information.

If the past determination process result exists (Yes at step S206), the second estimation unit 24 estimates the second estimation information using the past determination process result by the determination unit 26 (step S208).

Next, the second calculation unit 25 calculates the second reliability (step S209).

Next, the determination unit 26 decides the position and the pose of the camera 10B from the first estimation information, the second estimation information, and the third estimation information, based on the first reliability, the second reliability, and the third reliability (step S210). Specifically, the determination unit 26 may determine any one of the estimation information as the final output result, based on the first reliability, the second reliability, and the third reliability. For example, when estimation is performed in the first estimation unit 202 and the first reliability is equal to or larger than a threshold, the determination unit 26 may determine the first estimation information as the final output result. For example, when the first reliability is equal to or smaller than a threshold, the determination unit 26 may refer to the third reliability and, if the third reliability is equal to or larger than a threshold, may determine the third estimation information as the final output result. For example, when the third reliability is also equal to or smaller than a threshold, the determination unit 26 may determine the second estimation information as the final output result.

For example, as another integrating method, the determination unit 26 may integrate the respective estimation information based on the first reliability and the third reliability and determine a new position and pose of the camera 10B as the final output result. Specifically, for the translation components represented by three variables, the determination unit 26 may calculate new translation components by the linear weighted mean using the first estimation information and the third estimation information. For the rotation components represented by four components by quaternions, the determination unit 26 may focus on θ, which is the common term in four variables of the rotation components, and calculate new rotation components by spherical linear interpolation (SLERP).

The threshold for reliability can be set as desired by the user and may be a constant represented by the floating-point system, for example, such as 0.9997. The same threshold may be set for the first reliability, the second reliability, and the third reliability, or different thresholds may be set. For example, when the first reliability and the third reliability are used as the main estimation method, lower thresholds may be set for the first reliability and the third reliability. When the first reliability and the third reliability do not exceed the threshold, the threshold for the second reliability may be set to 0 such that the estimation information by the second estimation unit is always employed as the output result.

As described above, the estimation device 20 in the second arrangement can estimate the position and the pose of the movable body 10, and further based on the third estimation information having the third reliability.

### Third Arrangement

A third arrangement will now be described. In a description of the third arrangement, a description similar to the second arrangement is omitted, and the points differing from the second arrangement will be described. In the third arrangement, control of saving or discarding the position and the pose of the camera 10B determined by the determination unit 26 is described.

### Example of Functional Configuration

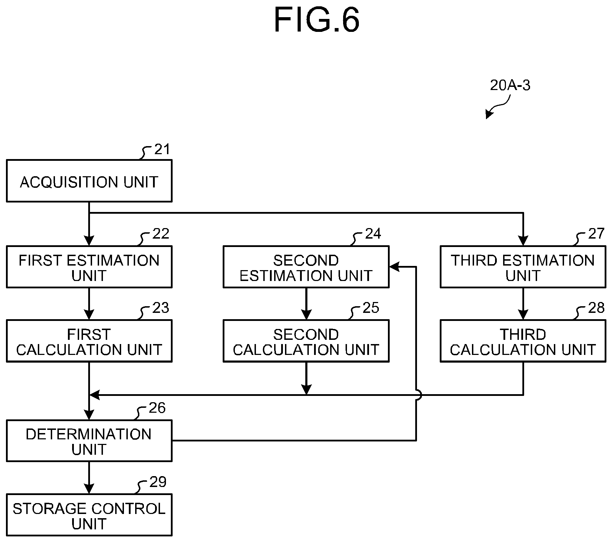

FIG. 6 is a diagram illustrating an example of the functional configuration of a processing unit 20A-3 in the estimation device 20 in the third arrangement. The processing unit 20A-3 includes an acquisition unit 21, a first estimation unit 22, a first calculation unit 23, a second estimation unit 24, a second calculation unit 25, a determination unit 26, a third estimation unit 27, a third calculation unit 28, and a storage control unit 29. That is, in the third arrangement, the storage control unit 29 is added to the configuration of the second arrangement.

The storage control unit 29 stores the estimation result including time-series information at the time of image capturing and the determination process result into the storage unit 20B. The time-series information at the time of image capturing is, for example, the number that identifies an image (for example, frame number). The determination process result includes the most-recent position and pose of the camera 10B decided by the determination unit 26.

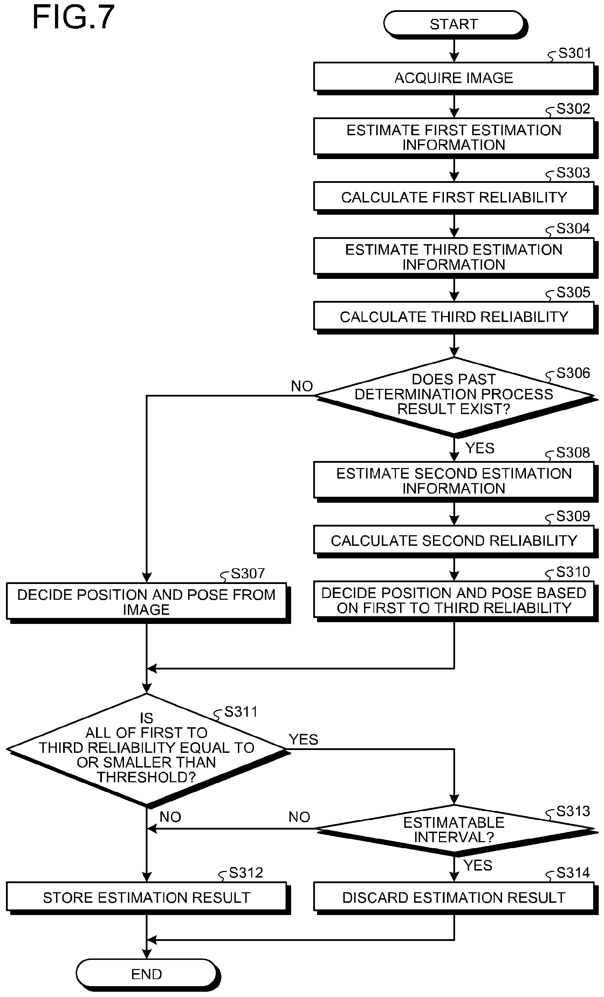

When all of the first to third reliability is equal to or smaller than a threshold and an interval for which the position and the pose of the camera 10B are not output does not exceed an estimatable interval, the storage control unit 29 discards the above-noted estimation result. The detail of storage control by the storage control unit 29 and the estimatable interval will be described later with reference to the flowchart in FIG. 7.

### Example of Estimation Method

FIG. 7 is a flowchart illustrating an example of the estimation method in the third arrangement.

The processes at step S301 to step S310 are the same as the processes at step S201 to step S210 in the first arrangement and will not be further elaborated.

The storage control unit 29 determines whether all of the first to third reliability is equal to or smaller than a threshold (step S311).

If all of the first to third reliability is not equal to or smaller than a threshold (No at step S311), the storage control unit 29 stores the estimation result including the position and pose decided by the process at step S310, the time-series information at the time of image capturing, and the integration determination process result into the storage unit 20B (step S312).

If all of the first to third reliability is equal to or smaller than a threshold (Yes at step S311), the storage control unit 29 determines whether within the estimatable interval of the position and the pose of the camera 10B (the valid interval for which the previously stored determination process result is valid) (step S313).

The estimatable interval is a length of time series in which the estimation device 20 can estimate the position and the pose of the camera 10B. The length of time series may be represented, for example, by the number of frames of images or may be the time (timestamp) corresponding to a frame number. That is, when the interval since the estimation information is saved last time does not exceed this estimatable interval (Yes at step S313), the storage control unit 29 discards the estimation result (step S314). When the estimatable interval is exceeded (No at step S313), the estimation result is stored into the storage unit 20B (step S312).

Specifically, for example, when the estimation result is stored into the storage unit 20B in the n^{th} frame after the storage control unit 29 starts estimation, and the estimatable interval of the estimation device 20 is five frames, the estimation result can be discarded from the (n+1)^{th} to (n+4)^{th} frames.

On the other hand, if the position and the pose of the camera 10B saved up to n+5 frames are not updated, the storage control unit 29 stores the estimation result (the position and the pose of the camera 10B) into the storage unit 20B, irrespective of the reliability. The position and the pose of the camera 10B in this case may be any one of the position and the pose of the camera 10B estimated by the first estimation unit 22, the second estimation unit 24, and the third estimation unit 27 or may be a new position and pose obtained by integrating the respective position and pose results.

As described above, in the estimation device 20 in the third arrangement, when any of the first to third reliability is larger than a determination threshold, the storage control unit 29 stores the determination process result. When all of the first to third reliability is equal to or smaller than a determination threshold and an interval for which the position and the pose of the camera 10B are not updated is within a valid interval for which the previously stored determination process result is valid, the storage control unit 29 discards the determination process result determined this time. When all of the first to third reliability is equal to or smaller than a determination threshold and an interval for which the position and the pose of the camera 10B are not updated exceeds the valid interval, the storage control unit 29 stores the determination process result determined this time.

With this configuration, the estimation device 20 in the third arrangement can estimate the location of the movable body 10 (at least one of the position and the pose) without interrupting the movement trajectory, without using a sensor other than the camera 10B.

Lastly, an example of the hardware configuration of the estimation device 20 in the first to third arrangements is described.

### Example of Hardware Configuration

FIG. 9 is a diagram illustrating an example of the hardware configuration of the estimation device 20 in the first to third arrangements. The estimation device 20 includes a control device 301, a main storage device 302, an auxiliary storage device 303, a display device 304, an input device 305, and a communication device 306. The control device 301, the main storage device 302, the auxiliary storage device 303, the display device 304, the input device 305, and the communication device 306 are connected through a bus 310.

The display device 304, the input device 305, and the communication device 306 are not necessarily included. For example, when the estimation device 20 is connected to another device, the display function, the input function, and the communication function of the other device may be used.

The control device 301 executes a computer program loaded from the auxiliary storage device 303 to the main storage device 302. The control device 301 is, for example, one or more processors such as CPU. The main storage device 302 is a memory such as read only memory (ROM) and RAM. Examples of the auxiliary storage device 303 include a memory card and a hard disk drive (HDD).

The display device 304 displays information. The display device 304 is, for example, a liquid crystal display. The input device 305 accepts input of information. The input device 305 is, for example, a hardware key. The display device 304 and the input device 305 may be a liquid crystal touch panel serving as the display function and the input function. The communication device 306 communicates with other devices.

The computer program executed in the estimation device 20 is stored in a computer-readable recording medium such as a CD-ROM, a memory card, a CD-R, and a digital versatile disc (DVD) in an installable or executable file format and provided as a computer program product.

The computer program executed in the estimation device 20 may be stored on a computer connected to a network such as the Internet and downloaded via the network. The computer program executed by the estimation device 20 may be provided via a network such as the Internet, without downloading.

The computer program executed in the estimation device 20 may be embedded in, for example, a ROM in advance.

The computer program executed in the estimation device 20 has a module configuration including functions that can be implemented by a computer program, of the functions of the estimation device 20.

The functions implemented by a computer program may be loaded to the main storage device 302 by the control device 301 reading and executing the computer program from a storage medium such as the auxiliary storage device 303. That is, the functions implemented by a computer program are generated on the main storage device 302.

Some of the functions of the estimation device 20 may be implemented by hardware such as IC. The IC is, for example, a processor that executes dedicated processing.

When the functions are implemented using a plurality of processors, each processor may implement one of the functions or may implement two or more of the functions.

While certain arrangements have been described, these arrangements have been presented by way of example only, and are not intended to limit the scope of the inventions. Indeed, the novel arrangements described herein may be embodied in a variety of other forms. The scope of the inventions is defined by the appended claims.

## Claims

1. An estimation device (20) comprising:
an acquisition unit (21) configured to acquire an image captured by a camera;
a first estimation unit (22) configured to estimate first estimation information indicating at least one of a position and a pose of the camera from the image captured by the camera;
a first calculation unit (23) configured to calculate first reliability indicating reliability of the first estimation information;
a second estimation unit (24) configured to estimate second estimation information indicating at least one of the position and the pose of the camera based on a previous image captured by the camera;
a second calculation unit (25) configured to calculate second reliability indicating reliability of the second estimation information; and
a determination unit (26) configured to decide at least one of the position and the pose of the camera from the first estimation information and the second estimation information, based on the first reliability and the second reliability, and output the decided at least one of the position and the pose as a determination process result, wherein
the second estimation unit (24) estimates the second estimation information based on a past determination process result by the determination unit (26).

2. The estimation device (20) according to claim 1, wherein the second estimation unit (24) performs estimation by applying Kalman filtering to the past determination process result and performing linear interpolation of at least one of the position and the pose of the camera at present.

3. The estimation device (20) according to claim 1, wherein the determination unit (26)
determines at least one of the position and the pose of the camera by using the first estimation information when the first reliability is larger than a first threshold,
determines at least one of the position and the pose of the camera by using the second estimation information when the first reliability is equal to or smaller than the first threshold and the second reliability is larger than a second threshold, and
does not output the determination process result when the first reliability is equal to or smaller than the first threshold and the second reliability is equal to or smaller than the second threshold.

4. The estimation device (20) according to claim 1, wherein when the first reliability is larger than a first threshold and the second reliability is larger than a second threshold, the determination unit (26) decides at least one of the position and the pose of the camera by at least one of new position and pose obtained by integrating the first estimation information and the second estimation information.

5. The estimation device (20) according to claim 4, wherein the determination unit (26) integrates a translation component of the camera included in the first estimation information and a translation component of the camera included in the second estimation information by weighted mean based on the first reliability and the second reliability.

6. The estimation device (20) according to claim 4, wherein the determination unit (26) integrates a rotation component of the camera included in the first estimation information and a rotation component of the camera included in the second estimation information by spherical linear interpolation based on the first reliability and the second reliability.

7. The estimation device (20) according to claim 1, further comprising:
a third estimation unit (27) configured to estimate third estimation information indicating at least one of the position and the pose of the camera from the image, using an estimation method differing from the second estimation unit (24); and
a third calculation unit (28) configured to calculate third reliability indicating reliability of the third estimation information, wherein
the determination unit (26) decides at least one of the position and the pose of the camera from the first to third estimation information, and further based on the third reliability.

8. The estimation device (20) according to claim 7, wherein the first to third reliability is calculated based on at least one of a value of a rotation component of the pose of the camera and the amount of movement of a translation component of the camera.

9. The estimation device (20) according to claim 7, further comprising a storage control unit (20B) configured to:
store the determination process result when any of the first to third reliability is larger than a determination threshold;
discard the determination process result determined this time when all of the first to third reliability is equal to or smaller than the determination threshold and an interval for which at least one of the position and the pose of the camera is not updated is within a valid interval for which the determination process result previously stored is valid; and
store the determination process result determined this time when all of the first to third reliability is equal to or smaller than the determination threshold and the interval for which at least one of the position and the pose of the camera is not updated exceeds the valid interval.

10. An estimation method performed by a computer and comprising:
acquiring an image captured by a camera;
estimating first estimation information indicating at least one of a position and a pose of the camera from the image captured by the camera;
calculating first reliability indicating reliability of the first estimation information;
estimating second estimation information indicating at least one of the position and the pose of the camera based on a previous image captured by the camera;
calculating second reliability indicating reliability of the second estimation information; and
deciding at least one of the position and the pose of the camera from the first estimation information and the second estimation information, based on the first reliability and the second reliability, and outputting the decided at least one of the position and the pose as a determination process result, wherein
the estimating of the second estimation information is performed based on a past determination process result at the deciding.

11. A computer program product having a computer readable medium including programmed instructions, wherein the instructions, when executed by a computer, cause the computer to perform:
acquiring an image captured by a camera;
estimating first estimation information indicating at least one of a position and a pose of the camera from the image captured by the camera;
calculating first reliability indicating reliability of the first estimation information;
estimating second estimation information indicating at least one of the position and the pose of the camera based on a previous image captured by the camera;
calculating second reliability indicating reliability of the second estimation information; and
deciding at least one of the position and the pose of the camera from the first estimation information and the second estimation information, based on the first reliability and the second reliability, and outputting the decided at least one of the position and the pose as a determination process result, wherein
the estimating of the second estimation information is performed based on a past determination process result at the deciding.

## Patentansprüche

1. Eine Schätzvorrichtung (20), umfassend:
eine Erfassungseinheit (21), die so konfiguriert ist, dass sie ein von einer Kamera aufgenommenes Bild erfasst;
eine erste Schätzeinheit (22), die so konfiguriert ist, dass sie aus dem von der Kamera aufgenommenen Bild erste Schätzinformationen schätzt, die mindestens entweder die Position oder die Pose der Kamera angeben;
eine erste Berechnungseinheit (23), die dazu ausgelegt ist, eine erste Zuverlässigkeit zu berechnen, die die Zuverlässigkeit der ersten Schätzinformationen angibt;
eine zweite Schätzeinheit (24), die dazu ausgelegt ist, zweite Schätzinformationen zu schätzen, die mindestens entweder die Position oder die Pose der Kamera auf der Grundlage eines zuvor von der Kamera aufgenommenen Bildes angeben;
eine zweite Berechnungseinheit (25), die dazu ausgelegt ist, eine zweite Zuverlässigkeit zu berechnen, die die Zuverlässigkeit der zweiten Schätzinformationen angibt; und
eine Bestimmungseinheit (26), die so konfiguriert ist, dass sie zumindest entweder die Position oder die Pose der Kamera aus den ersten Schätzinformationen und den zweiten Schätzinformationen auf der Grundlage der ersten Zuverlässigkeit und der zweiten Zuverlässigkeit bestimmt und die so bestimmte Position oder Pose als Ergebnis des Bestimmungsprozesses ausgibt, wobei
die zweite Schätzeinheit (24) die zweiten Schätzinformationen auf der Grundlage eines früheren Ergebnisses des Bestimmungsprozesses durch die Bestimmungseinheit (26) schätzt.

2. Schätzvorrichtung (20) nach Anspruch 1, wobei die zweite Schätzeinheit (24) eine Schätzung durchführt, indem sie eine Kalman-Filterung auf das frühere Bestimmungsprozessergebnis anwendet und eine lineare Interpolation von mindestens entweder der Position oder der Pose der Kamera zum gegenwärtigen Zeitpunkt durchführt.

3. Schätzvorrichtung (20) nach Anspruch 1, wobei
die Bestimmungseinheit (26)
die Position und/oder die Pose der Kamera unter Verwendung der ersten Schätzinformation bestimmt, wenn die erste Zuverlässigkeit größer als ein erster Schwellenwert ist,
die Position und/oder die Pose der Kamera unter Verwendung der zweiten Schätzinformation bestimmt, wenn die erste Zuverlässigkeit gleich oder kleiner als der erste Schwellenwert ist und die zweite Zuverlässigkeit größer als ein zweiter Schwellenwert ist, und
das Ergebnis des Bestimmungsprozesses nicht ausgibt, wenn die erste Zuverlässigkeit gleich oder kleiner als der erste Schwellenwert ist und die zweite Zuverlässigkeit gleich oder kleiner als der zweite Schwellenwert ist.

4. Schätzvorrichtung (20) nach Anspruch 1, wobei, wenn die erste Zuverlässigkeit größer als ein erster Schwellenwert und die zweite Zuverlässigkeit größer als ein zweiter Schwellenwert ist, die Bestimmungseinheit (26) mindestens entweder die Position oder die Pose der Kamera anhand mindestens einer der neuen Position oder Pose bestimmt, die durch Integration der ersten Schätzinformationen und der zweiten Schätzinformationen erhalten wurden.

5. Schätzvorrichtung (20) nach Anspruch 4, wobei die Bestimmungseinheit (26) eine in den ersten Schätzinformationen enthaltene Translationskomponente der Kamera und eine in den zweiten Schätzinformationen enthaltene Translationskomponente der Kamera mittels eines gewichteten Mittelwerts auf der Grundlage der ersten Zuverlässigkeit und der zweiten Zuverlässigkeit integriert.

6. Schätzvorrichtung (20) nach Anspruch 4, wobei die Bestimmungseinheit (26) eine in den ersten Schätzinformationen enthaltene Rotationskomponente der Kamera und eine in den zweiten Schätzinformationen enthaltene Rotationskomponente der Kamera mittels sphärischer linearer Interpolation auf der Grundlage der ersten Zuverlässigkeit und der zweiten Zuverlässigkeit integriert.

7. Schätzvorrichtung (20) nach Anspruch 1, ferner umfassend:
eine dritte Schätzeinheit (27), die so konfiguriert ist, dass sie dritte Schätzinformationen, die zumindest entweder die Position oder die Pose der Kamera angeben, aus dem Bild unter Verwendung eines Schätzverfahrens schätzt, das sich von dem der zweiten Schätzeinheit (24) unterscheidet; und
eine dritte Berechnungseinheit (28), die so konfiguriert ist, dass sie eine dritte Zuverlässigkeit berechnet, die die Zuverlässigkeit der dritten Schätzinformationen angibt, wobei
die Bestimmungseinheit (26) mindestens entweder die Position oder die Pose der Kamera anhand der ersten bis dritten Schätzinformationen und ferner auf der Grundlage der dritten Zuverlässigkeit bestimmt.

8. Schätzvorrichtung (20) nach Anspruch 7, wobei die erste bis dritte Zuverlässigkeit auf der Grundlage mindestens entweder eines Wertes einer Rotationskomponente der Pose der Kamera oder des Bewegungsumfangs einer Translationskomponente der Kamera berechnet wird.

9. Schätzvorrichtung (20) nach Anspruch 7, die ferner eine Speichersteuereinheit (20B) umfasst, die so konfiguriert ist, dass sie:
das Ergebnis des Bestimmungsprozesses speichert, wenn eine der ersten bis dritten Zuverlässigkeiten größer als ein Bestimmungsschwellenwert ist;
das diesmal ermittelte Ergebnis des Bestimmungsprozesses verwirft, wenn alle der ersten bis dritten Zuverlässigkeitswerte gleich oder kleiner als der Bestimmungsschwellenwert sind und ein Intervall, in dem mindestens entweder die Position oder die Pose der Kamera nicht aktualisiert wird, innerhalb eines gültigen Intervalls liegt, für das das zuvor gespeicherte Ergebnis des Bestimmungsprozesses gültig ist; und
das diesmal ermittelte Ergebnis des Bestimmungsprozesses zu speichern, wenn alle der ersten bis dritten Zuverlässigkeitswerte gleich oder kleiner als der Bestimmungsschwellenwert sind und das Intervall, in dem mindestens entweder die Position oder die Pose der Kamera nicht aktualisiert wird, das gültige Intervall überschreitet.

10. Ein von einem Computer ausgeführtes Schätzverfahren, das umfasst:
Erfassen eines von einer Kamera aufgenommenen Bildes;
Schätzen erster Schätzinformationen, die mindestens entweder die Position oder die Pose der Kamera angeben, aus dem von der Kamera aufgenommenen Bild;
Berechnen einer ersten Zuverlässigkeit, die die Zuverlässigkeit der ersten Schätzinformationen angibt;
Schätzen zweiter Schätzinformationen, die mindestens entweder die Position oder die Pose der Kamera angeben, basierend auf einem zuvor von der Kamera aufgenommenen Bild;
Berechnen einer zweiten Zuverlässigkeit, die die Zuverlässigkeit der zweiten Schätzinformationen angibt; und
Bestimmen mindestens einer der Position und der Pose der Kamera aus den ersten Schätzinformationen und den zweiten Schätzinformationen auf der Grundlage der ersten Zuverlässigkeit und der zweiten Zuverlässigkeit, und Ausgeben der bestimmten mindestens einer der Position und der Pose als Ergebnis des Bestimmungsprozesses, wobei
das Schätzen der zweiten Schätzinformationen auf der Grundlage eines früheren Ergebnisses des Bestimmungsprozesses bei der Bestimmung durchgeführt wird.

11. Ein Computerprogrammprodukt mit einem computerlesbaren Medium, das programmierte Befehle enthält, wobei die Befehle, wenn sie von einem Computer ausgeführt werden, den Computer veranlassen, Folgendes durchzuführen:
Erfassen eines von einer Kamera aufgenommenen Bildes;
Schätzen erster Schätzinformationen, die mindestens eine der Position und der Pose der Kamera angeben, aus dem von der Kamera aufgenommenen Bild;
Berechnen einer ersten Zuverlässigkeit, die die Zuverlässigkeit der ersten Schätzinformationen angibt;
Schätzen von zweiten Schätzinformationen, die mindestens entweder die Position oder die Pose der Kamera angeben, basierend auf einem zuvor von der Kamera aufgenommenen Bild;
Berechnen einer zweiten Zuverlässigkeit, die die Zuverlässigkeit der zweiten Schätzinformationen angibt; und
Bestimmen mindestens einer der Position und der Pose der Kamera aus den ersten Schätzinformationen und den zweiten Schätzinformationen auf der Grundlage der ersten Zuverlässigkeit und der zweiten Zuverlässigkeit, und Ausgeben der bestimmten mindestens einer der Position und der Pose als Ergebnis des Bestimmungsprozesses, wobei
das Schätzen der zweiten Schätzinformationen auf der Grundlage eines früheren Ergebnisses des Bestimmungsprozesses bei der Bestimmung durchgeführt wird.

## Revendications

1. Dispositif d'estimation (20) comprenant :
une unité d'acquisition (21) configurée pour acquérir une image capturée par une caméra ;
une première unité d'estimation (22) configurée pour estimer des premières informations d'estimation indiquant au moins une parmi une position et une orientation de la caméra à partir de l'image capturée par la caméra ;
une première unité de calcul (23) configurée pour calculer une première fiabilité indiquant une fiabilité des premières informations d'estimation ;
une deuxième unité d'estimation (24) configurée pour estimer des deuxièmes informations d'estimation indiquant au moins une parmi la position et de l'orientation de la caméra sur la base d'une image précédente capturée par la caméra ; une deuxième unité de calcul (25) configurée pour calculer une deuxième fiabilité indiquant une fiabilité des deuxièmes informations d'estimation ; et
une unité de détermination (26) configurée pour déterminer au moins une parmi la position et l'orientation de la caméra à partir des premières informations d'estimation et des deuxièmes informations d'estimation, sur la base de la première fiabilité et de la deuxième fiabilité, et pour fournir en sortie la au moins une position ou orientation déterminée en tant que résultat de processus de détermination, dans lequel
la deuxième unité d'estimation (24) estime les deuxièmes informations d'estimation sur la base d'un résultat de processus de détermination antérieur effectué par l'unité de détermination (26).

2. Dispositif d'estimation (20) selon la revendication 1, dans lequel la deuxième unité d'estimation (24) effectue une estimation en appliquant un filtrage de Kalman au résultat de processus de détermination antérieur et en effectuant une interpolation linéaire de au moins une parmi la position ou l'orientation de la caméra à l'instant présent.

3. Dispositif d'estimation (20) selon la revendication 1, dans lequel
l'unité de détermination (26)
détermine au moins une parmi la position et l'orientation de la caméra en utilisant les premières informations d'estimation lorsque la première fiabilité est supérieure à un premier seuil,
détermine au moins une parmi la position et l'orientation de la caméra en utilisant les deuxièmes informations d'estimation lorsque la première fiabilité est égale ou inférieure au premier seuil et que la deuxième fiabilité est supérieure à un deuxième seuil, et
ne fournit pas en sortie le résultat de processus de détermination lorsque la première fiabilité est égale ou inférieure au premier seuil et que la deuxième fiabilité est égale ou inférieure au deuxième seuil.

4. Dispositif d'estimation (20) selon la revendication 1, dans lequel, lorsque la première fiabilité est supérieure à un premier seuil et que la deuxième fiabilité est supérieure à un deuxième seuil, l'unité de détermination (26) détermine au moins une parmi la position et l'orientation de la caméra à partir d'au moins une parmi une nouvelle position et une nouvelle orientation obtenues en intégrant les premières informations d'estimation et les deuxièmes informations d'estimation.

5. Dispositif d'estimation (20) selon la revendication 4, dans lequel l'unité de détermination (26) intègre une composante de translation de la caméra incluse dans les premières informations d'estimation et une composante de translation de la caméra incluse dans les deuxièmes informations d'estimation par une moyenne pondérée basée sur la première fiabilité et la deuxième fiabilité.

6. Dispositif d'estimation (20) selon la revendication 4, dans lequel l'unité de détermination (26) intègre une composante de rotation de la caméra incluse dans les premières informations d'estimation et une composante de rotation de la caméra incluse dans les deuxièmes informations d'estimation par interpolation linéaire sphérique basée sur la première fiabilité et de la deuxième fiabilité.

7. Dispositif d'estimation (20) selon la revendication 1, comprenant en outre :
une troisième unité d'estimation (27) configurée pour estimer des troisièmes informations d'estimation indiquant au moins une parmi la position et l'orientation de la caméra à partir de l'image, en utilisant une méthode d'estimation différente de la deuxième unité d'estimation (24) ; et
une troisième unité de calcul (28) configurée pour calculer une troisième fiabilité indiquant une fiabilité des troisièmes informations d'estimation, dans lequel
l'unité de détermination (26) détermine au moins une parmi la position et l'orientation de la caméra à partir des premières à troisièmes informations d'estimation, et en outre sur la base de la troisième fiabilité.

8. Dispositif d'estimation (20) selon la revendication 7, dans lequel les première à troisième fiabilités sont calculées sur la base d'au moins une parmi une valeur d'une composante de rotation de l'orientation de la caméra et l'amplitude de déplacement d'une composante de translation de la caméra.

9. Dispositif d'estimation (20) selon la revendication 7, comprenant en outre une unité de commande de stockage (20B) configurée pour :
stocker le résultat de processus de détermination lorsqu'une quelconque des première à troisième fiabilités est supérieure à un seuil de détermination ;
écarter le résultat de processus de détermination obtenu à cette occurrence lorsque chacune des première à troisième fiabilités est égale ou inférieure au seuil de détermination et qu'un intervalle pendant lequel au moins une parmi la position et l'orientation de la caméra n'est pas mise à jour se situe dans un intervalle valide pour lequel le résultat de processus de détermination précédemment stocké est valide ; et
stocker le résultat de processus de détermination obtenu à cette occurrence lorsque chacune des première à troisième fiabilités est égale ou inférieure au seuil de détermination et que l'intervalle pendant lequel au moins une parmi la position et l'orientation de la caméra n'est pas mise à jour dépasse l'intervalle valide.

10. Procédé d'estimation mis en œuvre par un ordinateur et comprenant :
l'acquisition d'une image capturée par une caméra ;
l'estimation de premières informations d'estimation indiquant au moins une parmi une position et une orientation de la caméra à partir de l'image capturée par la caméra ;
le calcul d'une première fiabilité indiquant une fiabilité des premières informations d'estimation ;
l'estimation de deuxièmes informations d'estimation indiquant au moins une parmi la position et l'orientation de la caméra sur la base d'une image précédente capturée par la caméra ;
le calcul d'une deuxième fiabilité indiquant une fiabilité des deuxièmes informations d'estimation ; et
la détermination d'au moins une parmi la position et l'orientation de la caméra à partir des premières informations d'estimation et des deuxièmes informations d'estimation, sur la base de la première fiabilité et de la deuxième fiabilité, et la génération de la au moins une parmi la position et l'orientation déterminée en tant que résultat de processus de détermination, dans lequel
l'estimation des deuxièmes informations d'estimation est effectuée sur la base d'un résultat de processus de détermination antérieur lors de la détermination.

11. Produit logiciel comportant un support lisible par ordinateur comprenant des instructions programmées, dans lequel les instructions, lorsqu'elles sont exécutées par un ordinateur, amènent l'ordinateur à effectuer :
l'acquisition d'une image capturée par une caméra ;
l'estimation de premières informations d'estimation indiquant au moins une parmi une position et une orientation de la caméra à partir de l'image capturée par la caméra ;
le calcul d'une première fiabilité indiquant une fiabilité des premières informations d'estimation ;
l'estimation de deuxièmes informations d'estimation indiquant au moins une parmi la position et l'orientation de la caméra sur la base d'une image précédente capturée par la caméra ;
le calcul d'une deuxième fiabilité indiquant une fiabilité des deuxièmes informations d'estimation ; et
la détermination d'au moins une parmi la position et l'orientation de la caméra à partir des premières informations d'estimation et des deuxièmes informations d'estimation, sur la base de la première fiabilité et de la deuxième fiabilité, et la génération de la au moins une parmi la position et l'orientation déterminée en tant que résultat de processus de détermination, dans lequel
l'estimation des deuxièmes informations d'estimation est effectuée sur la base d'un résultat de processus de détermination antérieur lors de la détermination.
